# EUROPEAN PATENT APPLICATION

(11) **EP 3 104 537 A1**
(43) Date of publication of application: **14.12.2016**
(21) Application number: 15290154.2
(22) Date of filing: 10.06.2015
(51) Int. Cl.: H04B 10/2507, H04B 10/27, H04B 10/294, H04B 10/572

(54) **METHOD FOR IMPROVING SIGNAL TRANSMISSION QUALITY IN AN OPTICAL NETWORK AND ASSOCIATED EQUIPMENT**

(71) Applicant: ALCATEL LUCENT, 92100 Boulogne-Billancourt (FR)
(72) Inventor: Jenneve, Philippe, 91620 Nozay (FR); Mestre Adrover, Miquel Angel, 91620 Nozay (FR); Morea, Annalisa, 20871 Vimercate, MB (IT)
(74) Representative: Croonenbroek, Thomas Jakob

(57) **Abstract**

The present invention refers to a method for improving signal quality in an optical network (1) wherein optical signals are transmitted from an ingress node (N1) to an egress node (N3) via a lightpath (L1-L2) comprising at least one spectral filter (7), the said method comprising the following steps:
- transmitting an optical signal from a transmitter (3) of the ingress node (N1) to a receiver (5) of the egress node (N3), (101)
- determining, from the reception of the transmitted optical signal, the offset (Δf) between the central frequency (fcₑ) of the transmitted optical signal and the central frequency (fc_{eq}) of the filtering transfer function (7_{eq}) associated with the at least one filter (7) of the lightpath (L1-L2), (104)
- shifting the central frequency (fcₑ) of the transmitter (3) for matching with the central frequency (fc_{eq}) of the filtering transfer function (7_{eq}) when sending an optical signal toward the egress node (N3) (106).

## Description

### BACKGROUND OF THE INVENTION

The present invention relates to the field of optical networks and more particularly to the signal transmission quality in such networks.

With the growth of exchanged data worldwide, throughput of the communication networks have always to be increased to cope with the customers demand. Such high throughputs have been achieved by optical networks as they allow an efficient use of the spectral bandwidth thanks to the wavelength division multiplexing wherein several data channels are multiplexed and transmitted simultaneously. Thus, to improve even more the throughput, one way is to increase the data rate by using high modulation format and increasing the symbol rate and the other way is to reduce the channel spacing. However, the limit for such optimization is reached when the spectral width of the signal becomes close to the spectral bandwidth of the wavelength channel. Indeed, if the spectral width of the signal becomes larger than the spectral bandwidth of the channel, a part of the signal is filtered out which reduces the signal quality at destination. In practice, during a transmission through the links of the network, the signals are filtered several times, generally twice per crossed node, and the different filters may comprise a detuning, that is to say a frequency shift with respect to the theoretical frequency frame of the channel, so that the parts of the signal located next to the cutting frequencies may be filtered out which leads to a degradation of the signal quality at destination.

### SUMMARY OF THE INVENTION

It is therefore an object of the present invention to provide a solution for reducing the degradation of the signal quality during transmission due to the detuning of the crossed filters leading to a better quality of signal at destination even with signals having a spectral width close to the spectral bandwidth of the transmission channel.

Thus, the present invention refers to a method for improving signal quality in an optical network wherein optical signals are transmitted from an ingress node to an egress node via a lightpath comprising at least one spectral filter, the said method comprising the following steps:
- transmitting an optical signal from a transmitter of the ingress node to a receiver of the egress node,
- determining, from the reception of the transmitted optical signal, the offset between the central frequency of the transmitted optical signal and the central frequency of the filtering transfer function associated with the at least one filter of the lightpath,
- shifting the frequency of the transmitter for matching with the central frequency of the filtering transfer function when sending an optical signal toward the egress node.

According to another aspect of the present invention, the lightpath comprises a plurality of spectral filters.

According to a further aspect of the present invention, the determination step comprises the following sub-steps:
- comparing the spectral envelope of the received signal with a theoretical template,
- determining the offset between the central frequency of the emitted signal and the central frequency of the filtering transfer function based on the comparison of the spectral envelope and the theoretical template.

According to an additional aspect of the present invention, the theoretical template corresponds to the theoretical spectral envelope associated with the modulation format of the transmitted signal.

According to another aspect of the present invention, the optical signals transmitted through the optical network are wavelength division multiplexing signals comprising a plurality of channels and the optical signal corresponds to the signal transmitted on a single channel.

According to a further aspect of the present invention, the steps of the method are achieved for the plurality of channels.

According to an additional aspect of the present invention, the offsets determined for different multiplexed channels are correlated in order to detect a filter having a detuning higher than a predetermined threshold.

According to another aspect of the present invention, the receiver at the egress node is a coherent receiver and the shifting applied on the transmitter of the ingress node is also achieved on the local oscillator of the coherent receiver at the egress node.

According to a further aspect of the present invention, the steps are achieved periodically at predetermined time intervals in order to take into account the aging of the filters and/or transmitters.

According to an additional aspect of the present invention, the said method is applied on the transparent connections of the optical network.

The present invention also refers to processing means configured for:
- detecting an optical signal sent by a transmitter of an ingress node via a lightpath comprising at least one spectral filter,
- determining, from the reception of the transmitted optical signal, the offset between the central frequency of the transmitted optical signal and the central frequency of the filtering transfer function associated with the at least one filter of the lightpath,
- sending a command to the transmitter of the ingress node for shifting its frequency in order to match with the central frequency of the filtering transfer function when sending an optical signal toward the egress node.

The present invention also refers to an optical network comprising a plurality of nodes, a node comprising at least one transmitter, at least one receiver, at least one spectral filter and processing means.

According to another aspect of the present invention, the at least one spectral filter is a wavelength selective switch or an array waveguide grating.

### BRIEF DESCRIPTION OF THE DRAWINGS

FIG.1 is a diagram of a network portion comprising three nodes and a lightpath connecting the nodes;
FIG.2 is a plot of a normalized power with respect to a normalized frequency for different numbers of crossed tuned filters;
FIG.3 is a plot of a normalized power with respect to a normalized frequency for different numbers of crossed filters wherein the filters comprise a detuning of 4GHz;
FIG.4 is a diagram of the network of fig.1 wherein the spectral envelopes and the central frequency of the different filters are represented;
FIG.5 is a flowchart representing the different steps of the method for improving the signal quality of the transparent connections of the network;

In these drawings, the elements having the same reference correspond to elements having a similar function. Furthermore, with references composed of a number and an index, the number designates the class of elements having a common function and the index defines a particular element of the class. For example the reference 7 refers to the filters in general or to a filter among other filters whereas the reference 7₁ refers to a particular filter.

Besides, the following embodiments are examples. Although the description refers to one or several embodiments, it does not mean that each reference refers to the same embodiment or that the described features apply only for this same embodiment. Features from different embodiments can also be combined to produce additional embodiments.

### DETAILED DESCRIPTION OF THE INVENTION

As used herein, the term "WDM" refers to the acronym Wavelength Division Multiplexing;

As used herein the term "WSS" refers to the acronym Wavelength Selective Switch;

As used herein the term "AWG" refers to the acronym Arrayed Wavelength Grating.

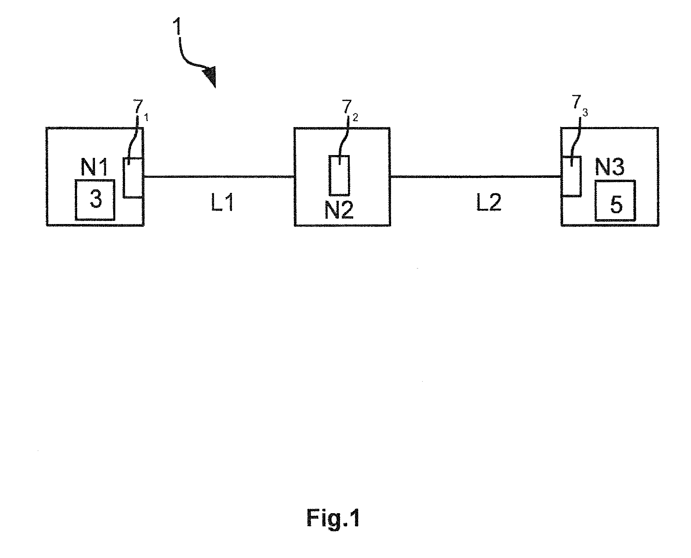

Figure 1 represents a portion of an optical network 1 comprising three nodes noted N1, N2 and N3 linked by two optical links noted L1 and L2. It is supposed that an optical signal is transmitted from the node N1 which is the ingress node to the node N3 which is the egress node via the lightpath L1-L2 crossing the intermediate node N2. It is also considered that the signal is filtered in the ingress node N1, the crossed intermediate nodes N2 and the egress node N3. In practise, several filters can be crossed in each node but in the present example, we will consider the resulting of the filter transfer function of each node. At the ingress node N1, the signal is emitted by a transmitter 3 which comprises generally a laser source. At the egress node N3, the signal is received and detected by a receiver 5 which can be either a coherent or a non coherent receiver. The signal is filtered in filters 7₁, 7₂ and 7₃ located respectively in the nodes N1, N2 and N3. The filters are for example implemented within wavelength selective switches "WSS" or arrayed wavelength grating "AWG" to select the different channels. The signal emitted at the ingress node N1 has a given modulation format and a given spectral shape which is smaller or in the range of the bandwidth of a transmission channel within which the signal is transmitted. The bandwidth of a transmission channel is for example 50GHz and is centered on a 192.000GHz central frequency. As a consequence, to be transmitted on this channel, the signal emitted by the laser source must lie in the channel bandwidth between 191.975GHz and 192.025GHz for instance depending on the grid. The filters 7 adapted for filtering this channel are therefore set with a central frequency of 192.000GHz and a total bandwidth of 50GHz. However, due to the imperfections of the filters 7, detuning may appear between the different filters 7, for example central frequency of a first filter 7, for example the filter 7₁ of node N1, is 191.998GHz whereas the central frequency of a second filter 7, for example the filter 7₂ of node N2, is 192.003GHz. In such case, only the part of the signal comprised between 191.978GHz and 192.023GHz will not be filtered out by the first 7₁ and the second 7₂ filters. Furthermore, the transmitter 3 itself has imperfections so that its emitted signal is not necessarily perfectly aligned on the center frequency 192.000GHz but may be offset with respect to the theoretical value leading to an additional detuning.

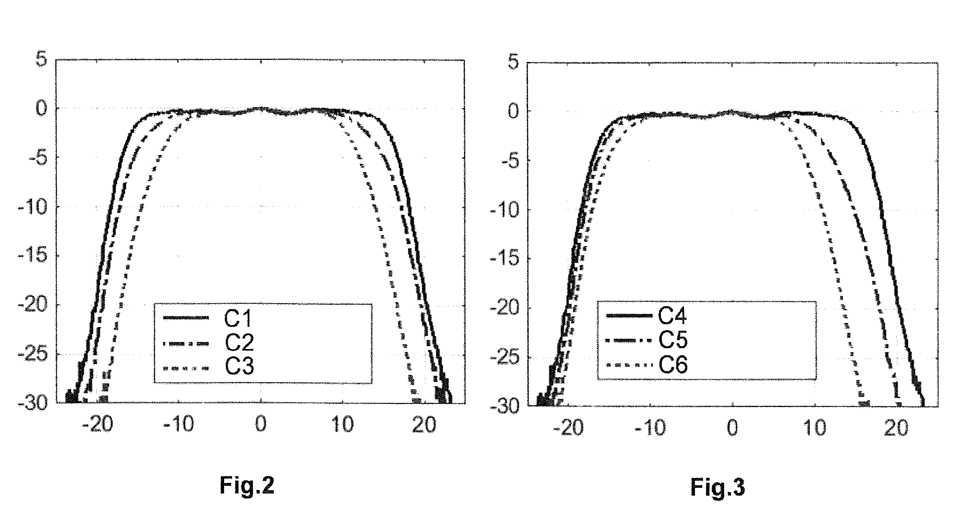

These detunings lead to a degradation of the signal quality. Fig.2 represents the normalized power in dB with respect to a normalized frequency in GHz. The normalized power is obtained by dividing the power values P by the maximum power value Pₘₐₓ (P/Pₘₐₓ) and the normalized frequency is obtained by subtracting the frequency values f by the central frequency fc (f-fc). The curve C1 (solid line) represents the spectral envelope of the original signal, the curve C2 (dashes) represents the spectral envelope after transmission through two tuned filters, that is to say filters having the same central frequency as the transmitted signal and the curve C3 (dotted line) represents the spectral envelope after transmission through ten tuned filters. It can be observed that the spectral width of the signal reduces with the number of crossed filters but this reduction is symmetric on both sides of the spectrum.

Fig.3 represents a similar representation (normalized power with respect to normalized frequency). In fig.3 the curve C4 (solid line) represents the original signal and is therefore identical to the curve C1, the curve C5 (dashes) represents the spectral envelope after transmission through two detuned filters having a 4GHz offset and the curve C6 (dotted line) represents the spectral envelope after transmission through ten detuned filters having a 4GHz offset. In such case, the spectral width of the signal envelope is much more reduced on one side of the spectrum. As a consequence, in the case of the curve C6, the part of the signal which is filtered out is larger than the part of the filtered signal of the curve C3 which leads to a higher degradation of the signal and a lower signal quality at the egress node N3.

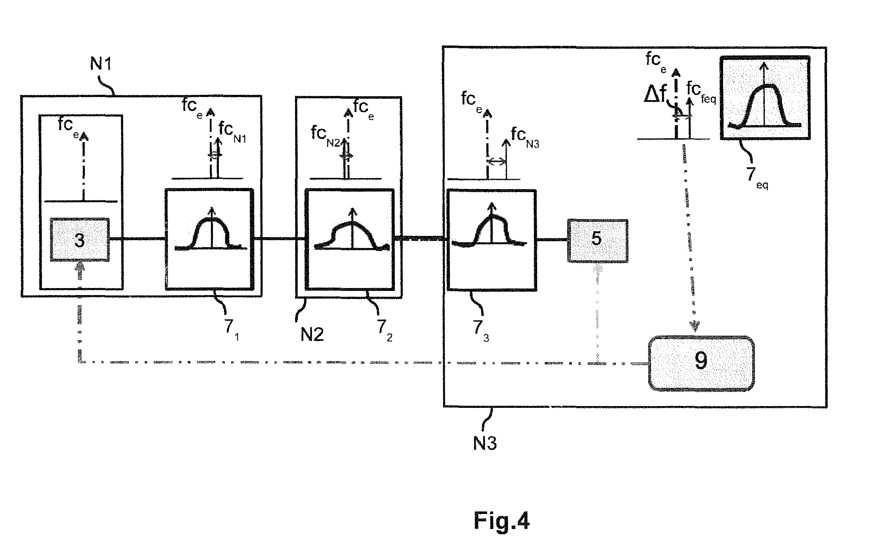

Thus, in order to limit the effect of such detuning of the transmitter 3 and the different filters 7, the signal received at the egress node is processed to determine the offset between the central frequency noted fcₑ of the signal emitted at the ingress node, N1 in the present case, and the central frequency of the filtering transfer function associated with the lightpath of the signal from the ingress node to the egress node, L1-L2 in the present case. This filtering transfer function corresponds to the determination of a filter equivalent to the plurality of filters 7 crossed along the lightpath from the ingress node to the egress node. In the example of figure 1, the lightpath is L1-L2 and the filtering transfer function is the filtering function equivalent to the combination of the filters 7₁,7₂ and 7₃ crossed in nodes N1, N2 andN3. In fig.4 are represented the spectral envelopes of the different filters 7 crossed through the lightpath L1-L2 as well as the offset between the central frequency of each filter, noted Fc_{N1}, Fc_{N2} and Fc_{N3} with respect to the central frequency of the transmitter fcₑ. The combination of these filters leads to the filtering transfer function 7_{eq} with a central frequency fc_{eq} which has an offset noted Δf with respect to the central frequency fcₑ of the transmitter 3.

For a given modulation format, baudrate and pulse shaping, the spectral envelope of the signal emitted by the transmitter 3 is always practically the same. Thus, the shape of the spectral envelope of the signal emitted by the transmitter 3 is known by the receiver 5 so that a processing of the signal detected by the receiver 5 enables to determine the filtering transfer function undergone by the signal along its transmission.

By comparing the spectral envelop detected by the receiver 5 to a theoretical template corresponding to the emitted signal, the central frequency fcₑ of the emitted signal as well as the central frequency fc_{eq} of the filtering transfer function can be determined. Indeed, the theoretical template corresponds to the curve C4 in Fig.3. If the spectral envelop of the received signal corresponds to the curve C6, it is possible to determine that central frequency of the filtering transfer function has an offset of 4GHz with respect to the central frequency of the emitter due to the asymmetry of the spectral envelop.

Thus, from the signal detected by the receiver 5, processing means 9 can determine the offset Δf between the central frequency fcₑ of the emitted signal and the central frequency fc_{eq} of the filtering transfer function. This offset is then sent to the transmitter 3 in order to shift its laser of an offset corresponding to the determined offset. The shifting of the laser of the transmitter 3 of node N1 to match with the central frequency fc_{eq} of the filtering transfer function for transmissions towards the node N3 enables to reduce signal losses due to the detuning between the filters 7 and the transmitter 3 and therefore to improve the signal quality.

Besides, if the receiver 5 is a coherent receiver, the offset is also transmitted to the local oscillator of the receiver 5 and the frequency of the local oscillator is also shifted in the same way as the transmitter 3 in order to allow a good detection of the signals.

Furthermore, such determination of the offset between the transmitter 3 and the filtering transfer function can be repeated periodically along the time at predetermined intervals in order to take into account the aging of the transmitter 3 and of the filters 7. For example such determination can be achieved every hour, every day, every week or every month.

This determination and this shifting can be achieved on all the transparent lightpaths of the network.

Furthermore, in the case of a WDM network, such determination can be achieved on several channels or even all the channels of a given lightpath and the laser or lasers of the transmitter 3 are shifted of the determined offset for each channel.

The processing of the signals can be achieved at the egress node N3 and the determined offset is then sent to control plane equipments for being transmitted to the transmitter 3 of the ingress node N1 but the signal processing may also be achieved by control plane equipments. In both configurations, the processing may comprise a comparison of the filtering transfer function for different channels on the same lightpath and for the second configuration for a channel or different channels having a partial common lightpath in order to detect a failing filter. Indeed, if, for several signals travelling through a common node an offset higher than a predetermined threshold is determined, it may mean that one of the filters of this common node has a failure so that such processing may allow detecting a failing filter.

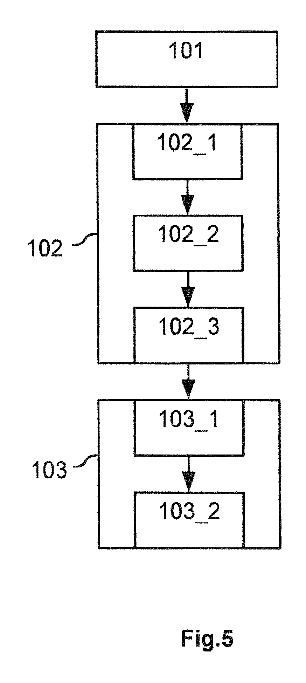

The different steps of the method according to the present invention will now be described in details based on figure 5.

The first step 101 refers to the transmission of a signal from an ingress node, N1 in the present case represented in figure 1, to an egress node N3 in the present case, through a transparent lightpath, L1-L2 in the present case. The transmitted signal has a predetermined modulation format, baudrate and pulse shaping, known by the receiver 5 of the egress node N3, and can be any type of signal, for example a control signal, a test signal or a data signal.

The second step 102 refers to determination of the offset Δf between the central frequency of the spectral envelope of the detected signal and the central frequency of the emitted signal and comprises three sub-steps:
A sub-step 102_1 which refers to the detection of the transmitted signal by the receiver 5 of the egress node N3. The detection can be achieved either by a coherent or a non coherent receiver.
The sub-step 102_2 refers to the comparison of the spectral envelope of the detected signal with the spectral envelope of the template corresponding to the modulation format of the transmitted signal.
The sub-step 102_3 refers to the determination of the offset between the central frequency of the spectral envelope of the detected signal and the central frequency of the emitted signal from the comparison of step 102_2.

The third step 103 corresponds to the shifting of the frequency of the transmitter corresponding to the offset Δf determined in step 102 and comprises two sub-steps:
The sub-step 103_1 refers to the transmission of the determined offset Δf to the transmitter 3 of the ingress node N1 and possibly to the local oscillator of the receiver 5 of the egress node N3 in the case of a coherent receiver.
The sub-step 103_2 refers to a shifting of the frequency of the transmitter 3 corresponding to the offset Δf determined in step 102 when transmitting signals to the egress node N3 on the channel corresponding to the signal transmission of step 101 in order to cancel the offset determined in step 102.

The method described above for a single channel of a single lightpath can be applied in the same way on any channels of any transparent lightpath of the network, for example on the different channels of a WDM network. The steps 102_2 and 102_3 are achieved by processing means 9 that are implemented for example within microcontrollers, microprocessors, computers, servers or any other processing means known by the man skilled in the art. These processing means 9 can be located within the nodes as represented in figure 4 or anywhere within the network.

Thus, the determination of the offset between the central frequency of the transmitter and the central frequency of the filtering transfer function along the transparent lightpath and the shifting of the central frequency of the transmitter to match with the central frequency of the filtering transfer function enables to reduce the impairments due to the detuning between the transmitter and the different filters and therefore enables to improve the signal quality at destination without requiring additional equipments.

## Claims

1. Method for improving signal quality in an optical network (1) wherein optical signals are transmitted from an ingress node (N1) to an egress node (N3) via a lightpath (L1-L2) comprising at least one spectral filter (7), the said method comprising the following steps:
- transmitting an optical signal from a transmitter (3) of the ingress node (N1) to a receiver (5) of the egress node (N3), (101)
- determining, from the reception of the transmitted optical signal, the offset (Δf) between the central frequency (fcₑ) of the transmitted optical signal and the central frequency (fc_{eq}) of the filtering transfer function (7_{eq}) associated with the at least one filter (7) of the lightpath (L1-L2), (102)
- shifting the central frequency (fcₑ) of the transmitter (3) for matching with the central frequency (fc_{eq}) of the filtering transfer function (7_{eq}) when sending an optical signal toward the egress node (N3) (103).

2. Method in accordance with claim 1 wherein the lightpath (L1-L2) comprises a plurality of spectral filters (7).

3. Method in accordance with claim 1 or 2 wherein the determination step comprises the following sub-steps:
- comparing the spectral envelope of the received signal with a theoretical template, (102_2)
- determining the offset (Δf) between the central frequency (fcₑ) of the emitted signal and the central frequency (fc_{eq}) of the filtering transfer function (7_{eq}) based on the comparison of the spectral envelope and the theoretical template (102_3).

4. Method in accordance with claim 3 wherein the theoretical template corresponds to the theoretical spectral envelope associated with the modulation format, baudrate and pulse shaping of the transmitted signal.

5. Method in accordance with one of the previous claims wherein the optical signals transmitted through the optical network are wavelength division multiplexing signals comprising a plurality of channels and wherein the optical signal corresponds to the signal transmitted on a single channel.

6. Method in accordance with claim 5 wherein the steps of the method are achieved for the plurality of channels.

7. Method in accordance with claim 6 wherein the offsets determined for different multiplexed channels are correlated in order to detect a filter having a detuning higher than a predetermined threshold.

8. Method in accordance with one of the previous claims wherein the receiver (5) at the egress node (N3) is a coherent receiver and wherein the shifting applied on the transmitter (3) of the ingress node (N1) is also achieved on the local oscillator of the coherent receiver at the egress node (N3).

9. Method in accordance with one of the previous claims wherein the steps are achieved periodically at predetermined time intervals in order to take into account the aging of the filters (7) and/or transmitters (3).

10. Method in accordance with one of the previous claims wherein the said method is applied on the transparent connections of the optical network (1).

11. Processing means (9) configured for:
- detecting an optical signal sent by a transmitter (3) of an ingress node (N1) via a lightpath (L1-L2) comprising at least one spectral filter (7),
- determining, from the reception of the transmitted optical signal, the offset (Δf) between the central frequency (fcₑ) of the transmitted optical signal and the central frequency (fc_{eq}) of the filtering transfer function (7_{eq}) associated with the at least one spectral filter (7) of the lightpath (L1-L2),
- sending a command to the transmitter (3) of the ingress node (N1) for shifting its central frequency (fcₑ) in order to match with the central frequency (fc_{eq}) of the filtering transfer function (7_{eq}) when sending an optical signal toward the egress node (N3).

12. Optical network (1) comprising a plurality of nodes (N1, N2, N3), a node comprising at least one transmitter (3), at least one receiver (5), at least one spectral filter (7) and processing means (9) in accordance with claim 11.

13. Optical network in accordance with claim 12 wherein the at least one spectral filter (7) is implemented in a wavelength selective switch.
